# EUROPÄISCHE PATENTANMELDUNG

(11) **EP 0 944 272 A1**
(43) Veröffentlichungstag der Anmeldung: **22.09.1999**
(21) Anmeldenummer: 98440055.6
(22) Anmeldetag: 18.03.1998
(51) Int. Cl.: H04Q 7/00, H04Q 7/38

(54) **Telekommunikationsanlage mit mehreren Funkbasisstationen**

(71) Anmelder: ALCATEL, 75088 Paris (FR)
(72) Erfinder: Rousseau, Jean-René, 95000 Neuville sur Oise (FR); Riff, Roland, 67100 Strassbourg (FR); Gruner, Richard, 67800 Selestat (FR)
(74) Vertreter: Knecht, Ulrich Karl, Dipl.-Ing.

(57) **Zusammenfassung**

Es sind Telekommunikationsanlagen (kurz TK-Anlagen) mit mehreren Funkbasisstationen bekannt. Bei TK-Anlagen, die nach gemäß dem DECT-Standard (Digital Enhanced Cordless Telephone) ausgelegt sind, wird von jeder Funkbasisstation eine Funkzelle versorgt. Für eine eindeutige Zuordnung zwischen der DECT-TK-Anlage und den Teilnehmerengeräten senden die Funkbasisstationen eine sogenannte ARI-Kennung (Access Rights Identifier) aus, die nur zugriffsberechtigte Teilnehmerendgeräte richtig empfangen und dekodieren können. Da innerhalb der ARI-Kennung 8 byte reserviert sind für die Kodierung der Funkbasisstations-Nummern können an eine herkömmliche DECT-TK-Anlage maximal 256 Funkbasisstationen angeschlossen werden.

Um eine deutlich größere, möglichst unbegrenzte, Anzahl von Funkbasisstationen anschliessen zu können wird nun eine Telekommunikationsanlage (TK) vorgeschlagen, bei der eine erste Untermenge der Funkbasisstationen eine erste Kennung (ARI1) und bei der zumindest eine zweite Untermenge der Funkbasisstationen eine zweite Kennung (ARI2) aussendet, welche von den Teilnehmerendgeräten (MS) empfangen werden, um festzustellen, welche Untermenge der Funkbasisstationen den momentanen Aufenthaltsbereich des jeweiligen Telekommunikationsendgerätes versorgt.

## Beschreibung

Telekommunikationsanlagen, kurz auch TK-Anlagen genannt, dienen zum Anschluß von mehreren Teilnehmern an ein Telekommunikationsnetz. Zum drahtlosen Anschluß von Teilnehmern sind TK-Anlagen mit mehreren Funkbasisstationen bekannt, die mit drahtlosen Teilnehmerendgeräten in Funkverbindung stehen. Beispielsweise sind sogenannte DECT-TK-Anlogen bekannt (Digital Enhanced Cordless Telephone), bei denen jede Funkbasisstation eine Funkzelle versorgt. Für eine eindeutige Zuordnung zwischen der DECT-TK-Anloge und den Teilnehmerengeräten senden die Funkbasisstationen eine sogenannte ARI-Kennung (Access Rights Identifier) aus, die nur zugriffsberechtigte Teilnehmerendgeräte richtig empfangen und dekodieren können. Im DECT-Standard sind innerhalb der ARI-Kennung 8 byte reserviert für die Kodierung der Funkbasisstations-Nummern. Demnach können an eine herkömmliche DECT-TK-Anlage maximal 256 Funkbasisstationen angeschlossen werden. Es ist jedoch wünschenswert eine TK-Anlage bereitzustellen, an die eine deutlich größere, möglichst unbegrenzte, Anzahl von Funkbasisstationen angeschlossen werden kann.

Vorgeschlagen wird nun eine Telekommunikationsanlage mit mehreren Funkbasisstationen zur Kommunikation mit drahtlosen Teilnehmerendgeräten, bei der eine erste Untermenge der Funkbasisstationen eine erste Kennung und bei der zumindest eine zweite Untermenge der Funkbasisstationen eine zweite Kennung aussendet, welche von den Teilnehmerendgeräten empfangen werden, um festzustellen, welche Untermenge der Funkbasisstationen den momentanen Aufenthaltsbereich des jeweiligen Telekommunikationsendgerätes versorgt.

Dadurch wird erreicht, daß nahezu beliebig viele Untermengen gebildet werden können, die wiederum jeweils soviele Funkbasisstationen enthalten können wie eine herkömmliche TK-Anlage. Mit der vorgeschlagenen Maßnahme wird die Anzahl der Funkbasisstationen um ein Vielfaches erhöht, wobei weitestgehend auf die bewährte Hardware und Software, die vorzugweise konform zum DECT-Standard ist, zurückgegriffen werden kann.

Besonders vorteilhaft ist es, wenn zumindest in einem der drahtlosen Teilnehmerendgerät nicht alle von den Funkbasisstationen ausgesendeten Kennungen gespeichert sind. Damit kann einzelnen Teilnehmerendgeräten der Zugriff auf alle Funkbasisstationen verwehrt werden, was beispielsweise eine einfache Bildung von geschlossenen Benutzergruppen ermöglicht.

Außerdem ist es besonders vorteilhaft, wenn die TK-Anlage Steuerungsmittel enthält, die den Funkzellenwechsel eines Teilnehmerendgerätes zwischen zwei Funkbasisstationen, die verschiedene Kennungen aussenden, nur dann zuläßt, wenn in diesem Teilnehmerendgerät die beiden Kennungen gespeichert sind. Dadurch können auch räumliche Grenzen gezogen werden, um Kommunikationszonen für Teilnehmer zu bilden.

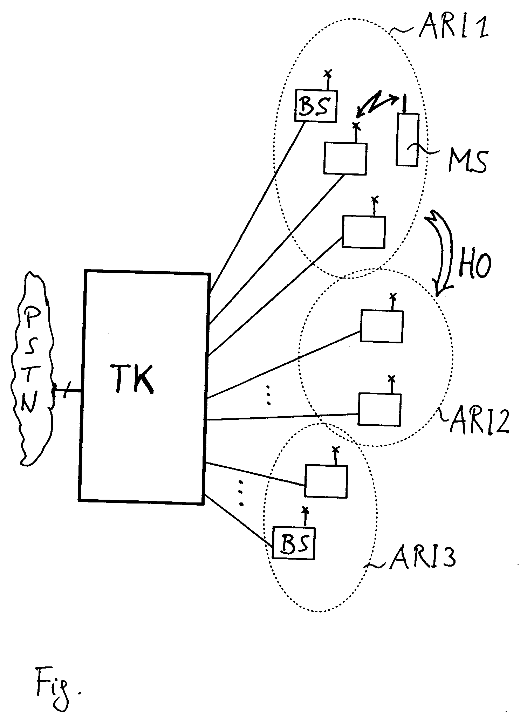

Die Erfindung wird im folgenden anhand eines Ausführungsbeispiels und unter Zuhilfenahme der beiliegenden Zeichnung beschrieben:

Die Figur ist die schematische Darstellung einer Telekommunikationsanlage TK, an die mehrere Funkbasisstationen BS angeschlossen sind. Die Funkbasisstationen können mit drahtlosen Teilnehmerendgeräten kommunizieren. In der Figur ist beispielhaft ein solches drahtloses Teilnehmerendgerät MS dargestellt.

Die Telekommunikationsanlage TK, im weiteren kurz Anlage genannt, ist mit einem Telekommunikationsnetz, nämlich mit dem öffentlichen Telekommunikationsnetz PSTN, verbunden.

Die Anlage TK stellt Verbindungen her zwischen den drahtlosen Teilnehmerendgeräten untereinander oder zwischen den drahtlosen Teilnehmerendgeräten und Endgeräten, die an das öffentliche Telekommunikationsnetz PSTN angeschlossen sind.

Die an die Anlage TK angeschlossenen Funkbasisstationen BS sind mehreren Untermengen zugeordnet, in diesem Beispiel drei Untermengen. Jeder dieser Untermengen ist eine Kennung zugeordnet, die die entsprechenden Funkbasisstationen aussenden. Die Funkbasisstationen der ersten Untermenge senden eine erste Kennung ARI1, die der zweiten Untermenge eine zweite Kennung ARI2 und die der dritten Untermenge eine dritte Kennung ARI3 aus. In diesem Beispiel ist jede Funkbasisstation nur jeweils einer der drei Untermengen zugeordnet.

Jede Kennung, z.B. ARI1, enthält ein 8 byte großes Datenfeld zur Eintragung von Funkbasistations-Nummern. Das bedeutet, daß in jeder dieser drei Untermengen bis zu 256 Funkbasisstationen enthalten sein können. Die Anlage TK kann somit mit bis 768 Funkbasisstationen BS verbunden sein, wodurch sie einen sehr großen Bereich versorgen kann.

In dem in der Figur dargestellten Teilnehmerendgerät MS sind alle drei Kennungen ARI1 bis ARI3 abgespeichert, damit das Teilnehmerendgerät beim Empfang einer Kennung feststellen kann, in welcher Untermenge es sich momentan befindet. Da das Teilnehmerendgerät MS über alle Kennungen ARI1 bis ARI3 verfügt, kann es mit allen Funkbasisstationen BS kommunizieren und zwischen den verschiedenen Bereichen wechseln. Es ist auch denkbar, daß in einem Teilnehmerendgerät nur eine oder wenige Kennungen abgespeichert sind, damit dieses Teilnehmerendgerät nur in einem bzw. wenigen Bereichen zur Kommunikation mit den entsprechenden Funkbasisstationen berechtigt ist.

Die vorgeschlagene Anlage TK ist besonders gut geeignet die verschiedenen Bereiche eines größeren Firmengeländes zu versorgen. Jedem Bereich wird eine bestimmte Kennung zugeordnet, wobei sich ein jeder Bereich wiederum unterteilt in Funkzellen, die von jeweils einer der Funkbasisstationen BS versorgt werden.

Die Anlage TK enthält auch Steuerungsmittel zum Weiterreichen einer Kommunikationsverbindung von einer Funkzelle zur nächsten. In der Figur ist symbolisch ein Weiterreichen HO von dem Bereich mit der ersten Kennung ARI1 zu dem Bereich mit der zweiten Kennung ARI2 dargestellt. Verläßt nun ein Teilnehmerendgerät einen Bereich und wechselt in einen nächsten, so wird anhand von der Qualität der Funkverbindungen über den Zeitpunkt des Weiterreichens entschieden. Das bedeutet beispielsweise, daß die Empfangsfeldstärke auf den Funkverbindungen zur alten und zur neuen Funkbasisstation gemessen wird. Ein anderes Kriterium ist beispielsweise das Signal-Rausch-Verhältnis.

Dadurch, daß mehrere Kennungen ARI1 bis ARI3 verwendet werden, kann die Anlage TK jederzeit feststellen, in welchen der verschiedenen Bereiche sich das Teilnehmerendgerät MS momentan aufhält. Die Verfolgung der Aufenthaltsorte von mobilen Teilnehmerendgeräten kann auch ausgenützt werden, um Alarmmeldungen auszulösen, falls jemand ein Teilnehmerendgerät unberechtigterweise aus einem Bereich entfernt oder damit einen neuen Bereich betritt.

Die beschriebene Erfindung bezieht sich auf eine Anlage, an die räumlich davon abgesetzte Funkbasisstationen angeschlossen sind. Es ist auch denkbar, die Funkbasisstationen ganz oder zum Teil in die Anlage zu integrieren. Beispielsweise ist es denkbar, Signalverarbeitungsstufen, wie etwa Modulationsstufe und Demodulationsstufe in die Anlage zu integrieren und lediglich die Hochfrequenzstufe, vorzugweise nur HF-Verstärker und Antenne, in der räumlich abgesetzten Funkbasisstation zu belassen. In diesem Zusammenhang ist es vorteilhaft, wenn die räumlich abgesetzten HF-Teile der Funkbasisstationene über Lichtwellenleiter mit der Anlage verbunden sind. In diesem Falle kann die Anlage selbst bereits HF-Signale erzeugen und über die Lichtwellenleiter auf die räumlich abgesetzten HF-Teile verteilen.

## Patentansprüche

1. Telekommunikationsanlage (TK) mit mehreren Funkbasisstationen (BS), zur Kommunikation mit drahtlosen Teilnehmerendgeräten (MS), bei der eine erste Untermenge der Funkbasisstationen (BS) eine erste Kennung (ARI1) und bei der zumindest eine zweite Untermenge der Funkbasisstationen (BS) eine zweite Kennung (ARI2) aussendet, welche von den Teilnehmerendgeräten (MS) empfangen werden, um festzustellen, welche Untermenge der Funkbasisstationen (BS) den momentanen Aufenthaltsbereich des jeweiligen Telekommunikationsendgerätes (MS) versorgt.

2. Telekommunikationsanlage nach Anspruch 1,
bei der jede Funkbasisstation nur einer Untermenge zugeordnet ist und nur die eine entsprechende Kennung aussendet.

3. Telekommunikationsanlage (TK) nach Anspruch 1,
bei der in jedem drahtlosen Teilnehmerendgerät (MS) alle von den Funkbasisstationen (BS) ausgesendeten Kennungen (ARI1, ARI2, ARI3) gespeichert sind.

4. Telekommunikationsanlage nach Anspruch 1,
bei der zumindest in einem der drahtlosen Teilnehmerendgerät nicht alle von den Funkbasisstationen ausgesendeten Kennungen gespeichert sind.

5. Telekommunikationsanlage (TK) nach Anspruch 1,
bei der jede Funkbasisstation (BS) eine Funkzelle versorgt und die Steuerungsmittel zum Weiterreichen (HO) einer Kommunikationsverbindung von einer Funkzelle zur nächsten enthält.

6. Telekommunikationsanlage (TK) nach Anspruch 5,
bei der die Steuerungsmittel den Wechsel (HO) eines Teilnehmerengerätes (MS) zwischen zwei Funkbasisstationen (BS), die verschiedene Kennungen (ARI3, ARI2) aussenden, nur dann zuläßt, wenn in dem Teilnehmerendgerät (MS) diese beiden Kennungen (ARI1, ARI2) gespeichert sind.
